# EUROPEAN PATENT APPLICATION

(11) **EP 4 501 433 A1**
(43) Date of publication of application: **05.02.2025**
(21) Application number: 23189556.6
(22) Date of filing: 03.08.2023
(51) Int. Cl.: B01D 53/047, C01B 3/04, C01B 3/56

(54) **RECOVERY OF HYDROGEN FROM AN AMMONIA CRACKING PROCESS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: DUARTE TARAZONA, Annie, 78354 Les Loges-en-Josas (FR); BASIN, Marie, 78354 Les Loges-en-Josas (FR); LUTZ, Michael, 60439 Frankfurt am Mai (DE); VICARI, Lorenzo, 60439 Frankfurt am Mai (DE); BRANDANI, Federico, 78354 Les Loges-en-Josas (FR)
(74) Representative: Air Liquide

(57) **Abstract**

Process of separating hydrogen from an effluent gas produced by an endothermic ammonia cracking reaction, said effluent gas comprising hydrogen and nitrogen, said process comprising a step of pressure swing adsorption separation of the effluent gas, said step comprising separating the effluent gas by pressure swing adsorption according to a pressure cycle, thereby producing a hydrogen product gas and generating off gas, the pressure cycle comprising an off gas generation period of time during which said off gas is generated, said off gas generation period of time comprising :
- a fuel off gas generation period of time during which a fuel off gas is generated,
- a nitrogen richer off gas generation period of time during which a nitrogen richer off gas is generated, said nitrogen richer off gas having a higher nitrogen content than the fuel off gas, wherein the process comprises :
- routing the fuel off gas to a furnace (5) and combustion of said fuel off gas in said furnace (5) to provide heat to the endothermic ammonia cracking reaction,
- diverting the nitrogen richer off gas from the furnace (5).

## Description

The field of the present invention is that of a process of separating hydrogen from an effluent gas of an endothermic ammonia cracking reaction. The invention also relates to an apparatus for producing hydrogen by an endothermic cracking reaction of an ammonia feed stream.

The production of a cracked gas comprising hydrogen and nitrogen by an endothermic cracking reaction of an ammonia feed stream can be done in a catalytic reactor at elevated temperatures, generally from 500°C to 850°C. Such a unit typically comprises a metallic shell, a catalyst and a heat source to provide heat to the endothermic reaction. A PSA device or system can be used to separate the cracked gas, recover the hydrogen and generate a PSA off gas (or tail gas). The PSA off gas can be used as a fuel to bring heat to the endothermic cracking reaction. However, the PSA off gas contains most of the nitrogen from the cracked gas, in substantial amounts. Nitrogen is an inert gas that does not contribute to the calorific value of the fuel and that may even destabilize the flame.

It is an aim of the present invention to overcome these problems and to provide a process in which the properties of the PSA off gas as a fuel are improved.

For this purpose, the invention proposes a process of separating hydrogen from an effluent gas produced by an endothermic ammonia cracking reaction, said effluent gas comprising hydrogen and nitrogen, said process comprising a step of pressure swing adsorption separation of the effluent gas, said step comprising separating the effluent gas by pressure swing adsorption according to a pressure cycle, thereby producing a hydrogen product gas and generating off gas, the pressure cycle comprising an off gas generation period of time during which said off gas is generated, said off gas generation period of time comprising :
- a fuel off gas generation period of time during which a fuel off gas is generated,
- a nitrogen richer off gas generation period of time during which a nitrogen richer off gas is generated, said nitrogen richer off gas having a higher nitrogen content than the fuel off gas, wherein the process comprises :
- routing the fuel off gas to a furnace and combustion of said fuel off gas in said furnace to provide heat to the endothermic ammonia cracking reaction,
- diverting the nitrogen richer off gas from the furnace.

Using the fuel off gas, having a lower nitrogen inert gas content, as fuel to provide heat to the endothermic ammonia cracking reaction enhances the combustion properties in the furnace, increasing the radiation efficiency and stabilizing the flame. This higher LHV (LHV for lower heating value) fuel off gas decreases the amount of combustion gases for the same energy input and therefore the amount of combustion flue gas to be cooled down. This contributes to reducing the process steam generation. Not using the nitrogen richer off gas as fuel in the furnace results in less nitrogen inert gas brought to the combustion, thereby stabilizing the flame and reducing the quantity of flue gas generated.

In one embodiment, the nitrogen richer off gas has 80% or more, preferably 85% or more of nitrogen content.

In one embodiment, the fuel off gas has less than 80% of nitrogen content, preferably less than 75% of nitrogen content.

In one embodiment, a trim fuel is combusted in the furnace to provide additional heat to the endothermic ammonia cracking reaction.

In one embodiment, the nitrogen richer off gas has the highest nitrogen content among the off gas generated during the off gas generation period of time. Diverting a nitrogen richer off gas having the highest nitrogen content allows to divert more nitrogen inert gas from the furnace in a more efficient manner and therefore further enhances the combustion properties.

In one embodiment, the off gas generation period of time comprises a third off gas generation period of time, during which a third off gas is generated, said third off gas having the same nitrogen content as the fuel off gas or a lower nitrogen content than the fuel off gas and the process comprises diverting the third off gas from the furnace.

In one embodiment, the off gas generation period of time consists of the fuel off gas generation period of time and the nitrogen richer off gas generation period of time. Alternatively, the off gas generation period of time consists of the fuel off gas generation period of time, the nitrogen richer off gas generation period of time and the third off gas generation period of time.

In one embodiment, the step of routing the fuel off gas to the furnace and the step of diverting the nitrogen richer off gas from the furnace occur simultaneously. In particular, the step of routing the fuel off gas to the furnace and the steps of diverting the nitrogen richer off gas from the furnace and diverting the third off gas from the furnace occur simultaneously.

In one embodiment, the off gas generation period of time comprises at least one step of the pressure cycle.

In one embodiment, the off gas generation period of time comprises a purge step of the pressure cycle, during which the adsorbent is regenerated by counter currently providing a purge gas, and the nitrogen richer off gas generation period of time comprises a part of said purge step, in particular the beginning of said purge step or comprises the entire purge step. In particular, the fuel off gas generation period of time comprises the rest of said purge step. In one embodiment, the pressure cycle comprises at least one production step during which the hydrogen product is generated at the pressure cycle high pressure and said purge step is the first purge step in the pressure cycle following said at least one production step. In particular, the nitrogen richer off gas generation period of time may comprise a part of a second purge step following said first purge step, in particular the beginning of said second purge step, or may comprise the entire second purge step.

In one embodiment, the off gas generation period of time comprises a blow down step of the pressure cycle, during which the adsorbent is regenerated by counter-currently reducing the pressure during the pressure cycle, and the nitrogen richer off gas generation period of time comprises a part of said blow down step, in particular the end of said blow down step. In particular, the fuel off gas generation period of time comprises the rest of said blow down step. In one embodiment, said blow down step is the last step in the pressure cycle before a first purge step in the pressure cycle following at least one production step of the pressure cycle, in particular said blow down step is the last step in the pressure cycle before said first purge step.

In one embodiment, the pressure cycle comprises at least one co-current depressurization step between said production step and the blow down step or between said production step and the at least one purge step.

In one embodiment, the pressure cycle comprises at least one counter-current re-pressurization step between the at least one purge step and the at least one production step. In particular, the pressure cycle comprises at least one co-current re-pressurization step between the at least one counter-current re-pressurization step and the at least one production step.

In one embodiment, the fuel off gas is stored separately from the diverted nitrogen richer off gas, in particular stored in an off gas buffer tank. The stored fuel off gas is continuously routed to the furnace. In particular, the fuel off gas and the diverted nitrogen richer off gas are stored separately from each other, in particular in separate off gas buffer tanks. The diverted nitrogen richer off gas is stored as a stored nitrogen richer off gas and the stored fuel off gas is continuously routed to the furnace.

In one embodiment, the diverted nitrogen richer off gas, in particular the stored nitrogen richer off gas, is compressed thereby producing a compressed off gas.

In one embodiment, the process comprises a purification of the diverted nitrogen richer off gas, in particular a purification of the stored nitrogen richer off gas.

In one embodiment, the purification comprises routing the compressed off gas through a membrane system wherein it is split in a hydrogen rich permeate and a nitrogen rich retentate. Some of the hydrogen still contained in the off gas generated during the nitrogen richer off gas generation period of time can thereby be recovered.

In one embodiment, the hydrogen rich permeate is routed as a further fuel to the furnace and combusted in the furnace to provide heat to the endothermic ammonia cracking reaction. The combustion properties are further enhanced by the hydrogen rich permeate acting as a further combustion stabilizer.

In one embodiment, the hydrogen rich permeate is re-compressed and recycled with the effluent gas as feed to the step of pressure swing adsorption separation of the effluent gas.

In one embodiment, the nitrogen rich retentate is vented to the atmosphere.

In one embodiment, the nitrogen rich retentate is exported as a product.

In one embodiment, the purification comprises a separation by pressure swing adsorption of the diverted nitrogen richer off gas, in particular a separation by pressure swing adsorption of the stored nitrogen richer off gas, thereby producing a purified hydrogen stream and a PSA tailgas.

In one embodiment, the diverted nitrogen richer off gas, in particular the stored nitrogen richer off gas is combusted. For example, the diverted nitrogen richer off gas, in particular the stored nitrogen richer off gas, is combusted in a flare. In particular, at least part of the hydrogen rich permeate is combusted as a pilot flame for the flare.

In one embodiment, the diverted nitrogen richer off gas, in particular the stored nitrogen richer off gas, is vented.

In one embodiment, the process comprises a step of providing an ammonia feed stream, in particular obtained from a liquid ammonia feedstock that has been vaporized thereby obtaining said ammonia feed stream, as feed to the endothermic ammonia cracking reaction. In particular, the process comprises a step of vaporizing said liquid ammonia feedstock by heat exchanges with the effluent gas.

In one embodiment, the process comprises a step of cooling the effluent gas prior to the step of pressure swing adsorption separation of the effluent gas, which step comprises separating the cooled effluent gas by pressure swing adsorption according to the pressure cycle, thereby producing the hydrogen product gas and generating off gas. In particular, the step of cooling the effluent gas comprises cooling the effluent gas by heat exchange with the ammonia feedstock or by heat exchange with the ammonia feed stream.

In one embodiment, the effluent gas comprises remaining uncracked ammonia and the process comprises a step of removing by absorption the uncracked ammonia from the effluent gas or from the cooled effluent gas, for example by a water wash, prior to the step of pressure swing adsorption separation of the effluent gas, thereby producing an uncracked ammonia depleted effluent gas and an absorbed uncracked ammonia. In particular, the process comprises a step of recycling said absorbed uncracked ammonia as an ammonia fuel routed to the furnace, in addition to the fuel off gas routed to the furnace. The step of pressure swing adsorption separation of the effluent gas comprises separating the uncracked ammonia depleted effluent gas by pressure swing adsorption according to the pressure cycle, thereby producing the hydrogen product gas and generating off gas.

The invention also proposes an apparatus for producing hydrogen from ammonia, the
apparatus comprising :
   - an ammonia cracking reactor containing a catalyst for performing an endothermic cracking reaction of an ammonia feed stream, thereby producing an effluent gas comprising hydrogen and nitrogen,
   - a furnace arranged in thermal communication with the ammonia cracking reactor for the combustion of a fuel to provide heat to the endothermic cracking reaction,
   - a PSA system arranged for separating hydrogen from the effluent gas, thereby generating off gas,
the apparatus comprising :
   - a fuel off gas line fluidically connecting the PSA system with the furnace for providing a part of the off gas generated in the PSA system as fuel to the furnace,
   - a bypass line fluidically connected to the PSA system and arranged for diverting another part of the off gas generated in the PSA system from the furnace.

In one embodiment, the apparatus comprises a first buffer tank and a second buffer tank and the fuel off gas line is fluidically connecting the PSA system with the first buffer tank for storing a part of the off gas generated in the PSA system in the first buffer tank and the bypass line is fluidically connecting the PSA system with the second buffer tank for storing another part of the off gas generated in the PSA system in the second buffer tank.

In one embodiment, the PSA system comprises at least one adsorber vessel containing at least one adsorbent configured to selectively adsorb nitrogen. In one embodiment, the fuel off gas line comprises at least one fuel off gas conduit fluidically connecting each of the at least one adsorber vessel(s) with the first buffer tank and the bypass line comprises at least one bypass conduit fluidically connecting each of the at least one adsorber vessel(s) with the second buffer tank. In particular, the PSA system comprise valves arranged to route off gas from the at least one adsorber vessel to the first buffer tank through the at least one fuel off gas conduit and/or to route off gas from the at least one adsorber vessel to the second buffer tank through the at least one bypass conduit.

In one embodiment, the apparatus comprises a membrane system for purifying the diverted part of the off gas generated and the bypass line is fluidically connecting the PSA system to the membrane system. In particular, the apparatus comprises a permeate fueling conduit connecting a permeate side of the membrane system with the furnace for providing a membrane system permeate stream as an additional fuel to the furnace. In one embodiment, the apparatus comprises a compressor and the bypass line is fluidically connecting the PSA system with the compressor and with the membrane system.

In one embodiment, the PSA system is a first PSA system and the apparatus comprises a second PSA system comprising at least one adsorber vessel containing an adsorbent that is selectively adsorbent for nitrogen, and the bypass line is fluidically connecting the first PSA system to the second PSA system.

In one embodiment, the apparatus comprises a vent and the bypass line is fluidically connecting the first PSA system to the vent.

In one embodiment, the apparatus comprises a gas flare and the bypass line is fluidically connecting the first PSA system to the gas flare.

In one embodiment, the PSA system comprises at least two adsorber vessels containing an adsorbent that is selectively adsorbent for nitrogen, the adsorber vessels being arranged to undergo a pressure cycle with a phase interval between them.

The apparatus for producing hydrogen from ammonia as previously described can be used to implement the process of separating hydrogen from an effluent gas as previously described.

Fig 1 is a schematic view of an apparatus for producing hydrogen from ammonia,
Fig. 2 is a schematic view of a PSA system suitable for separating an effluent gas produced by the apparatus of figure 1,
Fig. 3 is a view of a PSA cycle according to a first embodiment of the invention,
Fig. 4 is a view of a PSA cycle according to a second embodiment of the invention.

In the present application, the word "connecting" in relation to a line, a conduit or a pipe shall be understood as fluidically connecting.

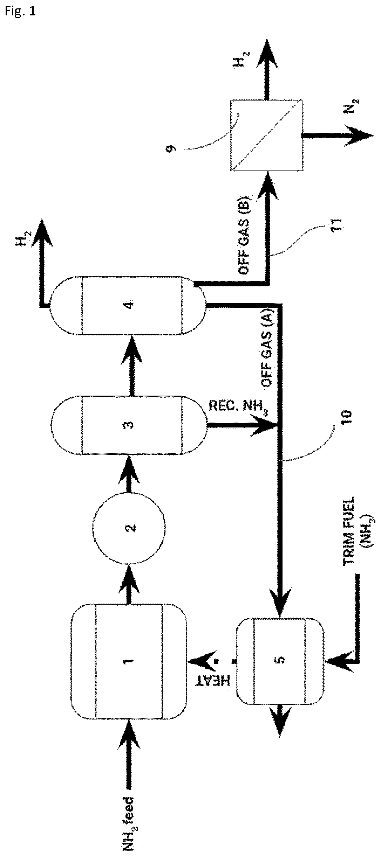

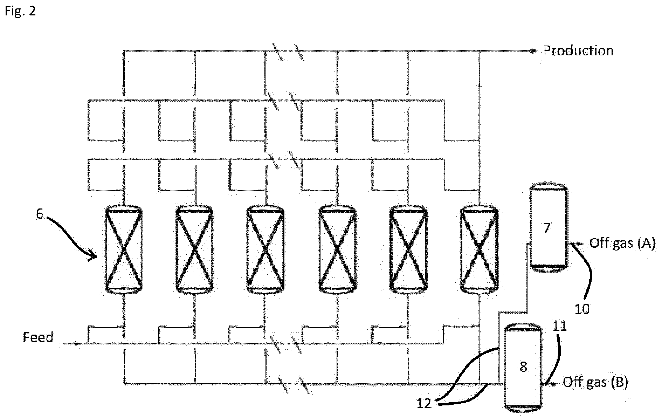

Figure 1 shows an apparatus for producing hydrogen from ammonia. The apparatus comprises an ammonia cracking reactor, also called ammonia cracker 1, that is fed with an ammonia feed stream obtained from an ammonia feedstock, for example a liquid ammonia feedstock that has been vaporized. The ammonia cracker 1 contains a catalyst configured to promote an endothermic cracking reaction of the ammonia feed stream. The apparatus comprises a furnace or firebox 5 that can be fed with a fuel, for example an ammonia trim fuel, to be combusted. The term trim fuel denotes a fuel that is not recycled from the process or the apparatus, typically useful for a quick heat regulation or for the apparatus start up. The furnace 5 is arranged in thermal communication with the ammonia cracker to provide heat to the endothermic cracking reaction of the ammonia feed stream. The ammonia cracker 1 produces thereby an effluent gas which comprises hydrogen, nitrogen and in some cases some uncracked ammonia. The effluent gas is discharged and cooled in a heat exchanger 2. The thus cooled effluent gas is then sent to a water wash column 3 wherein the uncracked ammonia is removed by absorption, thereby producing an uncracked ammonia depleted effluent gas. The water loaded with the absorbed uncracked ammonia can undergo a distillation in a distillation column (not represented) to recover the uncracked ammonia and recycle it to the furnace 5. The uncracked ammonia depleted effluent gas is then sent to a PSA system 4 for separating the effluent gas by pressure swing adsorption, thereby producing a hydrogen product gas and a PSA off gas. A fuel off gas line 10 is connecting the PSA system 4 and the furnace 5, so that PSA off gas generated by the PSA system 4 can be routed as a fuel off gas stream (or simply fuel stream) called off gas (A) to a burner of the furnace 5 and combusted to provide heat to the ammonia cracker 1 for performing the endothermic cracking reaction of the ammonia feed stream. "Fuel off gas" denotes an off gas generated that is used as fuel to provide heat to the endothermic ammonia cracking reaction. A bypass line 11 allows to route PSA off gas generated by the PSA system 4 as a stream separate from said fuel stream and to divert said separate stream from the furnace (ie not feeding it to the furnace), said separate stream being called off gas (B). The PSA system 4 of figure 1 is represented in more details in figure 2.

A pressure swing adsorption system or PSA system suitable for implementing the process according to the invention comprises at least one adsorber vessel (also called adsorber column or simply adsorber) filled with at least one adsorbent that selectively adsorbs nitrogen, in particular at least two adsorber vessels. In the case of only one adsorber vessel, a continuous production can be ensured by a suitable production buffer tank. In the case of several adsorber vessels, each adsorber vessel undergoes a pressure cycle, with a phase interval between the adsorber vessels. In the embodiment of figure 2, the PSA system comprises at least six adsorber vessels 6, and the apparatus comprises a first buffer tank 7 (or capacity vessel) and a second buffer tank 8 for storing two portions of the generated off gas, each in a separate buffer tank. The adsorber vessels 6 are suitably connected to each other by a set of conduits and valves (not represented), allowing them to be fed, discharged and to undergo a pressure cycle with a phase interval between the adsorber vessels 6. Among this set of conduits, conduits 12 are connecting the adsorber vessels 6 with the first and second buffer tanks 7, 8, said conduits being part of either the fuel off gas line 10 or of the bypass line 11.

The pressure swing adsorption of the PSA system 4 follows a pressure cycle, also called "PSA cycle", comprising the following steps :

Production step A : the effluent gas is co-currently fed to the PSA system 4. Nitrogen is more strongly adsorbed on the adsorbent than hydrogen. Therefore, a major part of the hydrogen flows through the adsorber vessel and the major part of a major part of the nitrogen is stopped in the adsorber vessel. The hydrogen product is thereby generated at the pressure cycle high pressure.

Co-current depressurization and provide purge step E1D+PP : the adsorber vessel is co-currently depressurized to an intermediate pressure of the pressure cycle. The least adsorbable hydrogen is further displaced towards the exit of the adsorber vessel and a hydrogen rich gas is discharged from the vessel. One part of the discharged hydrogen rich gas will be used as a purge gas, while another part will be used as a counter-current repressurization gas.

Blow down step BD : the adsorbent is regenerated by counter-currently reducing or further reducing the pressure in the adsorber vessel, typically by opening a valve making the gases within the adsorber vessel exit the adsorber vessel as off gas.

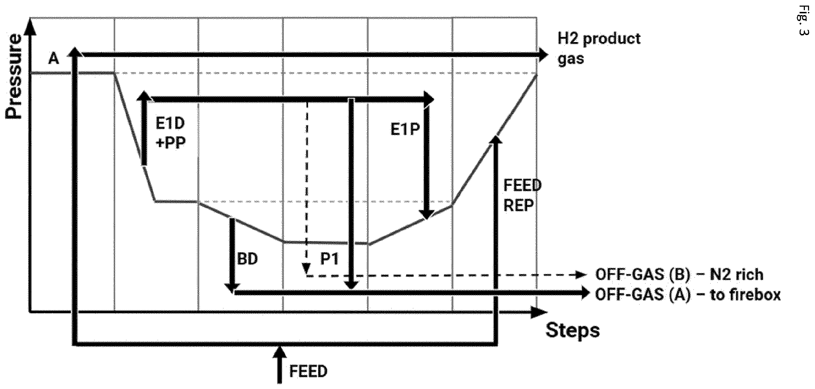

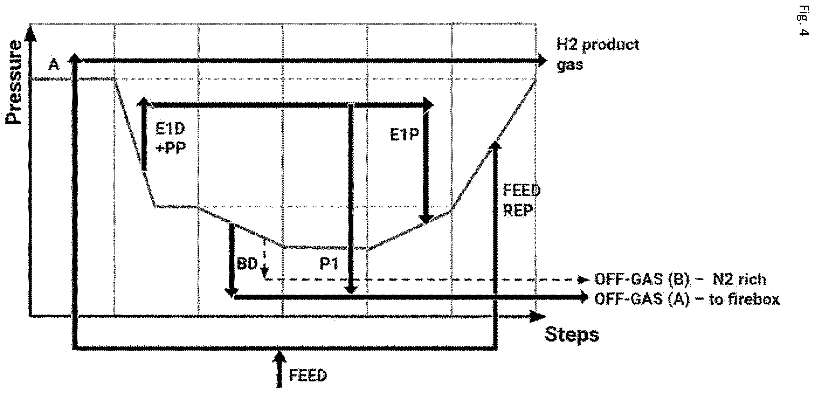

Purge step P1 : during a purge step, the adsorber vessel is typically counter-currently swept by the purge gas, like it is the case in the embodiment of figure 3 and 4, and an off gas exits the adsorber vessel. The purge gas contains a gas that is less strongly adsorbed by the adsorbent and can be provided by a co-current depressurization step and/or provide purge step of the pressure cycle. In the embodiments of figure 3 and 4, the purge is provided by the co-current depressurization and provide purge step E1D+PP. The partial pressure of the nitrogen decreases in the adsorber vessel, acting as a driving force for the desorption of the nitrogen from the adsorbent. This is realized at a low pressure of the pressure cycle, in particular the lowest pressure of the pressure cycle.

Counter-current repressurization step E1P : the adsorber is pressurized using the counter-current repressurization gas fed counter-currently to the adsorber vessel.

Co-current repressurization step FEED REP : the adsorber is pressurized until the pressure cycle high pressure with for example the effluent gas as a feed.

Co-current and counter-current are defined with respect to the circulation of the effluent gas fed to the at least one adsorber vessel and the circulation of the hydrogen product gas exiting the at least one adsorber vessel, during a production step. Co-current is the same direction of circulation as the effluent gas and the hydrogen product gas during a production step and counter-current is the opposite direction of circulation.

In a pressure cycle, a particular step is distinguished from the preceding step or from the following step for example through one of the following reasons :
- the existence or not of an inlet and/or outlet stream and/or through the direction of circulation in the adsorber of said inlet and/or outlet stream,
- through the origin of an inlet stream,
- through the destination of an outlet stream.

A phase, also called phase time, is equal to the duration of the pressure cycle divided by the number of adsorber vessels. The scope of the invention includes a phase during which several steps of the pressure cycle are performed and conversely a step of the pressure cycle being performed over several phases.

The PSA off gas is generated during the blow down step BD and the purge step P1 and these steps are constituting a period of time of the pressure cycle called off gas generation period of time. The off gas generation period of time comprises several steps of the pressure cycle during which several off gas streams are generated. One part of said off gas generation period of time is called a nitrogen richer off gas generation period of time and can comprise or can consist of one part of a pressure cycle step, an entire pressure cycle step, more than one pressure cycle step, for example an entire pressure cycle step plus one part of the next or previous step or a plurality of pressure cycle steps. In case of a plurality of steps of the pressure cycle, several off gas streams are generated during these steps. Another part, for example the rest, of the off gas generation period of time is called a fuel off gas generation period of time. During the fuel off gas generation period of time, a fuel off gas being part of the generated PSA off gas is generated. The fuel off gas generation period of time can comprise several steps of the pressure cycle during which several off gas streams are generated. During the nitrogen richer off gas generation period of time, a nitrogen richer off gas being part of the generated PSA off gas is generated, for example from a plurality of off gas streams generated during multiple steps comprised in the nitrogen richer off gas generation period of time.

During the separation of the effluent gas by pressure swing adsorption by the PSA system 4 as a whole, the fuel off gas generated is routed as a fuel off gas or fuel stream to a burner of the furnace 5 and combusted to provide heat to the endothermic cracking reaction of the ammonia feed stream.

The nitrogen richer off gas has a higher nitrogen content in average over said nitrogen richer off gas generation period of time (ie. taking into account possible fluctuations) than the fuel off gas, for example the nitrogen richer off gas has 80% or more, preferably 85% or more of nitrogen content while the fuel off gas has less than 80% of nitrogen content. The nitrogen richer off gas is therefore routed as off gas (B) and diverted from the furnace, thereby not participating to the heat input to the endothermic cracking reaction of the ammonia feed stream. Not using the off gas (B) directly as a fuel, which would be done for example by mixing it with off gas (A), results in less nitrogen in the off gas (A) flow rate provided as fuel to the furnace 5. The combustion properties of the fuel off gas in the furnace 5 are thus enhanced, increasing the radiation efficiency and stabilizing the flame. Off gas (A) and (B) can be routed as separate streams simultaneously and continuously from the PSA system 4 as a whole.

In the embodiment of figure 3, the nitrogen richer off gas generation period of time comprises the first part or beginning of the purge step P1, for example the first fifteen seconds, or even the first thirty seconds. During a purge step, the low nitrogen content of the purge gas, filling spaces of the adsorber vessel between the adsorbent and the adsorber shell, in contrast with the adsorbent loaded with still a high nitrogen content, creates a gradient in concentration between the adsorbent and said spaces of the adsorber vessel. This gradient, along with the low pressure in the adsorber vessel during the purge step, act as a driving force and ensure a significant part of the nitrogen desorption and adsorbent regeneration. P1 being the first purge step in the pressure cycle following the production step A, the purge gas will come into contact with the adsorbent for the first time after the production step A during the beginning of said purge step P1. Therefore, the beginning of the purge step P1 will see the highest gradient in concentration and the off gas generated during the beginning of the purge step P1, designated as nitrogen richer off gas, will typically have the highest nitrogen content among the off gas generated during the pressure cycle and its off gas generation period of time. The inventors have found that it is advantageous not to consider the whole generated off gas as a bulk of different flows coming out of one or more adsorber vessel(s) during several off gas generation steps, as in the prior art, but to branch off this particular flow of nitrogen richer off gas and to send a remaining part of generated off gas, having a lower nitrogen content, to the furnace. It is to be understood that the invention covers also cases wherein the nitrogen richer off gas generation period of time comprises an entire purge step. In cases wherein the pressure cycle comprises multiple purge steps, the invention covers also cases where the nitrogen richer off gas generation period of time comprises several of these purge steps. This applies as long as the pressure cycle comprises other steps during which off gas is generated with a lower nitrogen content, at least part of said off gas with a lower nitrogen content being routed from the PSA system 4 as a whole as a fuel stream and combusted to provide heat to the endothermic ammonia cracking reaction.

It is also to be understood that any step of the pressure cycle or part of a step, not being a purge step, during which the off gas is generated with a high enough nitrogen content, can be comprised in the nitrogen richer off gas generation period of time according to the invention.

In the embodiment of figure 4, the nitrogen richer off gas generation period of time comprises the last part or end of the blow down step BD. The gas filling the spaces of the adsorber vessel between the adsorbent and the adsorber shell, after the co-current decompression and provide purge step E1D+PP, still has a rather high hydrogen content. Most of this gas exits the adsorber vessel as a generated off gas during the first part of the blow down step BD and the gas exiting the adsorber vessel at the end of the blow down step BD typically turns out to have a high nitrogen content. The inventors have found that it is advantageous to branch off this gas exiting with a higher nitrogen content to send a remaining part of generated off gas, having a lower nitrogen content, to the furnace. It is to be understood that the invention covers also cases where the nitrogen richer off gas generation period of time comprises an entire blow down step. In case wherein the pressure cycle comprises multiple blow down steps, the invention covers also cases where the nitrogen richer off gas generation period of time comprises several of these blow down steps. This applies as long as the pressure cycle comprises other steps during which off gas is generated with a lower nitrogen content, at least part of said off gas with a lower nitrogen content being routed from the PSA system 4 as a whole as a fuel stream and combusted to provide heat to the endothermic ammonia cracking reaction.

In the embodiment of figure 1, the apparatus comprises a membrane system 9 capable of splitting off gas in a hydrogen rich permeate and a nitrogen rich retentate. In this embodiment, the bypass line 11 is connecting the second buffer tank 8 with the membrane system 9. Typically, the apparatus comprises a compressor (not represented) for compressing said off gas fed to the membrane system 9. The hydrogen rich permeate can be provided as an additional fuel to the furnace 5 through a permeate fueling conduit (not represented) connecting a permeate side of the membrane system 9 with the furnace 5.

In other non-represented embodiments, the off gas stored in the second buffer tank 8 can be fed to a second PSA system to be further purified, can be fed to a vent to be vented or can be fed to a gas flare to be flared.

## Claims

1. Process of separating hydrogen from an effluent gas produced by an endothermic ammonia cracking reaction, said effluent gas comprising hydrogen and nitrogen, said process comprising a step of pressure swing adsorption separation of the effluent gas, said step comprising separating the effluent gas by pressure swing adsorption according to a pressure cycle, thereby producing a hydrogen product gas and generating off gas, the pressure cycle comprising an off gas generation period of time during which said off gas is generated, said off gas generation period of time comprising :
- a fuel off gas generation period of time during which a fuel off gas is generated,
- a nitrogen richer off gas generation period of time during which a nitrogen richer off gas is generated, said nitrogen richer off gas having a higher nitrogen content than the fuel off gas, wherein the process comprises :
- routing the fuel off gas to a furnace (5) and combustion of said fuel off gas in said furnace (5) to provide heat to the endothermic ammonia cracking reaction,
- diverting the nitrogen richer off gas from the furnace (5).

2. Process according to the preceding claim, wherein the nitrogen richer off gas has the highest nitrogen content among the off gas generated during the off gas generation period of time.

3. Process according to one of the preceding claims, wherein the off gas generation period of time comprises a purge step (P1) of the pressure cycle, during which the adsorbent is regenerated by counter currently providing a purge gas, and the nitrogen richer off gas generation period of time comprises the beginning of said purge step (P1).

4. Process according to the preceding claim, wherein the pressure cycle comprises at least one production step (A) during which the hydrogen product is generated at the pressure cycle high pressure and said purge step (P1) is the first purge step in the pressure cycle following said at least one production step (A).

5. Process according to one of the preceding claims, wherein the off gas generation period of time comprises a blow down step (BD) of the pressure cycle, during which the adsorbent is regenerated by counter-currently reducing the pressure during the pressure cycle, and the nitrogen richer off gas generation period of time comprises the end of said blow down step (BD).

6. Process according to claims 4 and 5, wherein said blow down step (BD) is the last step in the pressure cycle before said first purge step (P1) in the pressure cycle.

7. Process according to one of the preceding claims, wherein the diverted nitrogen richer off gas is compressed thereby producing a compressed off gas.

8. Process according to one of the preceding claims, comprising a purification of the diverted nitrogen richer off gas.

9. Process according to claims 7 and 8, wherein the purification comprises routing the compressed off gas through a membrane system (9) wherein it is split in a hydrogen rich permeate and a nitrogen rich retentate.

10. Process according to the preceding claim, wherein the hydrogen rich permeate is routed as a further fuel to the furnace (5) and combusted in the furnace (5) to provide heat to the endothermic ammonia cracking reaction.

11. Process according to one of claims 8 to 10, wherein the purification comprises a separation by pressure swing adsorption of the diverted nitrogen richer off gas, thereby producing a purified hydrogen stream and a PSA tailgas.

12. Apparatus for producing hydrogen from ammonia, the apparatus comprising :
- an ammonia cracking reactor (1) containing a catalyst for performing an endothermic cracking reaction of an ammonia feed stream, thereby producing an effluent gas comprising hydrogen and nitrogen,
- a furnace (5) arranged in thermal communication with the ammonia cracking reactor for the combustion of a fuel to provide heat to the endothermic cracking reaction,
- a PSA system (4) arranged for separating hydrogen from the effluent gas, thereby generating off gas,
the apparatus comprising :
- a fuel off gas line (10) fluidically connecting the PSA system (4) with the furnace (5) for providing a part of the off gas generated in the PSA system (4) as fuel to the furnace (5),
- a bypass line (11) fluidically connected to the PSA system (4) and arranged for diverting another part of the off gas generated in the PSA system (4) from the furnace (5).

13. Apparatus according to the preceding claim, comprising a first buffer tank (7) and a second buffer tank (8) and the fuel off gas line (10) is fluidically connecting the PSA system (4) with the first buffer tank (7) for storing a part of the off gas generated in the PSA system (4) in the first buffer tank (7) and the bypass line (11) is fluidically connecting the PSA system (4) with the second buffer (8) tank for storing another part of the off gas generated in the PSA system (4) in the second buffer tank (8).

14. Apparatus according to the preceding claim, wherein the PSA system (4) comprises at least one adsorber vessel (6) containing at least one adsorbent configured to selectively adsorb nitrogen and the fuel off gas line comprises at least one fuel off gas conduit fluidically connecting each of the at least one adsorber vessel (6) with the first buffer tank (7) and the bypass line comprises at least one bypass conduit fluidically connecting each of the at least one adsorber vessel (6) with the second buffer tank (8).

15. Apparatus according to one of claims 12 to 14, comprising a membrane system (9) for purifying the diverted part of the off gas generated, the bypass line (11) connecting fluidically the PSA system (4) to the membrane system (9).
